# EUROPÄISCHE PATENTSCHRIFT

(11) **EP 2 439 112 B1**
(45) Veröffentlichungstag und Bekanntmachung des Hinweises auf die Patenterteilung: **15.07.2015**
(21) Anmeldenummer: 11008020.7
(22) Anmeldetag: 04.10.2011
(51) Int. Cl.: B60R 21/2165, B32B 5/02, B32B 27/40, B60R 21/215, D03D 15/00, D03D 27/08, B32B 27/12

(54) **Scharnier mit einer Textilie**
Hinge with a textile
Charnière dotée de textiles

(30) Priorität: 08.10.2010 DE 102010047750
(43) Veröffentlichungstag der Anmeldung: 11.04.2012
(73) Patentinhaber: F.A. Kümpers GmbH & Co. KG, 48429 Rheine (DE)
(72) Erfinder: Svatos, Petr, 54954 Police nad Metuji (CZ); Bonse, Rudolf, 48163 Münster (DE); Kümpers, Joan-Dirk, 48431 Rheine (DE)
(74) Vertreter: Castell, Klaus

(56) Entgegenhaltungen:
- EP-A2- 1 145 923
- EP-A2- 2 019 000
- WO-A1-2007/110048
- DE-A1-102008 042 657
- US-A1- 2004 164 531

## Beschreibung

Die Erfindung betrifft ein Scharnier mit einer Textilie, die ein erstes Teil und ein zweites Teil miteinander verbindet.

Derartige Scharniere, bei denen beispielsweise anstelle einer Zapfenverbindung ein flexibles Gewebe eingesetzt wird, sind vor allem dann günstig in der Herstellung, wenn die Textilie in zumindest eines der scharnierartig zu verbindenden Teile bei dessen Herstellung eingearbeitet werden kann.

Ein Anwendungsgebiet für ein Textilscharnier ist die Herstellung von Airbagklappen. Hierbei befindet sich hinter der Klappe der gefaltete Airbag. Die Klappe ist mit einer umlaufenden Sollbruchstelle in eine Verkleidung eingearbeitet. Sowie sich der Luftsack des Airbags entfaltet, wird diese Sollbruchstelle aufgebrochen. Ein Scharnier an einer Seite der Klappe erlaubt einerseits das Öffnen der Klappe, damit der Airbag durch die Öffnung hindurchtreten kann und andererseits sorgt dieses Scharnier dafür, dass die Klappe kontrolliert öffnet und eine Berührung der Klappe mit anderen Gegenständen oder dem Passagier verhindert wird. Die Klappe kann dabei durch ein Scharnier oder ein Halteseil gehalten werden.

Die Offenlegungsschrift DE 198 34 384 offenbart eine Instrumententafel, die mithilfe eines Fangbandes gehalten wird, wobei dieses in der Ruheposition der Airbagklappe einen losen Flächenbereich vorsieht, der in der Ausstellposition die Airbagklappe hält.

In der DE 10 2004 010 643 A1 ist eine Instrumententafel mit einem flächigen Scharnier offenbart, wobei das Scharnier eine Überlänge ausweist, die ein Zurückspringen der aufklappenden Airbagklappe verhindert. Die Überlänge ist als Schlaufe ausgeführt und mit einem Zusatzelement befestigt.

Ein Verkleidungsteil mit Airbagabdeckung und ein Verfahren zu seiner Herstellung offenbart die DE 10 2007 055 016 B3. Hier wird das Scharnier mit Überlänge an einem in die Airbagldappe eingeformten Steg befestigt und eingebettet.

Die Verbindung eines Klappscharniers mit einer Airbagklappe zeigt die Patentschrift DE 44 37 773 C1, wobei das Scharnier in die Versteifungsplatte eingepresst ist.

Die DE 199 35 625 A1 legt eine Verstärkungsstruktur aus einem Fasergewebe offen, in dem gedrehte, verzwirnte oder verschlaufte Fasern verwendet werden. Ein so gestaltetes Gewebe, Geflecht oder Gewirk erlaubt erfindungsgemäß eine größere Dehnung, so dass eine ungewollte Rissbildung des Fasergewebes verhindert wird.

Die Patentschrift DE 103 45 026 B4 zeigt ein Innenverkleidungsteil mit einer Einlage als Scharnier, wobei die Einlage so ausgebildet ist, dass beim Öffnungsstoß des Airbags ein bestimmter Energiebetrag dadurch absorbiert wird, dass sich die Einlage von der Zwischenlage ablöst. Die Einlage wird als Abstandsgewirk, vorzugsweise als Faden-Gewirk ausgeführt.

Die DE 10 2008 011 519 A1 offenbart ein textiles Flächengewebe mit einer Anfangsschwächung zum Aufreißen, wobei die Weiterreißkraft des textilen Flächengebildes in Vorzugsrichtung niedriger ist als in sämtlichen anderen Richtungen.

Ein weiteres textiles Scharnier ist aus der DE 10 2008 042 657 bekannt.

Die DE 10 2007 035 073 A1 beschreibt ein Scharnier für eine Airbagklappe, das als Gewirk oder Gestrick ausgeführt wird und mehrere Einlege- oder Stehfäden aufweist, die unter einem Winkel von wenigstens 15° zu den scharnierseitigen Kanten der Airbagklappe angeordnet sind. Als vorteilhaft wird bei dieser Erfindung angesehen, dass beim Herausbrechen der Airbagklappe die translatorische Bewegung der Klappe gedämpft in eine rotatorische Bewegung übergeht, indem der Gewirkfaden, vorzugsweise aus Polyester, eine niedrigere Festigkeit aufweist als die Einlege-oder Steherfäden. Nachdem der Gewirkfaden bei einer Dehnung von etwa 40 % reißt, wird die Klappe durch die hochfesten Steherfäden, die sich senkrecht zur Drehachse des Scharniers erstrecken, gehalten.

Textile Flächengebilde haben sich gegenüber Scharnieren aus Metall als vorteilhaft erwiesen. Diese sind leichter und bilden im Versagensfall keine Gefahr für die Insassen. Nachteilig bei den Ausführungen, in denen die Überlänge des textilen Flächengebildes als Schlaufe ausgeführt ist, hat sich erwiesen, dass sich das textile Flächengewebe nicht automatisiert in die Spritzgussform des Verkleidungsteils zuführen lässt.

Ferner stellt sich bei den verwendeten Gittergeweben als nachteilig heraus, dass die Kett- oder Schussfäden mit relativ geringer Kraft aus den Spritzgussteilen herausgelöst werden können und dann zum Bauteilversagen führen. Die Gitterstrukturen werden daher meist kostenträchtig als Drehergewebe ausgeführt und zusätzlich mittels eines Auftrags verfestigt. Zusätzlich werden diese Ausführungen meist nicht nur mit dem Polymer des Verkleidungsteils und der Airbagklappe umspritzt sondern aufwendig mit Zusatzelementen wie Schrauben oder Nieten an dem Verkleidungsteil und der Airbagklappe befestigt.

Der Erfindung liegt daher die Aufgabe zugrunde, ein Scharnier mit einer Textilie, die ein erstes Teil und ein zweites Teil miteinander verbindet, weiter zu entwickeln.

Dieser Aufgabe wird mit einem gattungsgemäßen Scharnier gelöst, bei dem die Textilie ein Gewebe ist und zwischen den Teilen einen Flor aus Schlaufen aufweist.

Über die Länge der zwischen den Teilen liegenden Schlaufen der Textilie kann eine definierte Länge festgelegt werden, die bei der Bewegung des Scharniers vorteilhaft ist. Die Schlaufen liegen während der Verarbeitung der Textilie als Flor vor, wobei die Schlaufen entweder nur zwischen den Teilen liegen oder auch mit den Teilen verbunden sind.

Die zwischen den Teilen liegenden Schlaufen sind während der Verarbeitung und auch während des Einsatzes in der Airbagdeckelklappe vollkommen kraftlos. Wie bei einem Froteehandtuch bildet das Gewebe eine Grundstruktur, die eine Zugbeanspruchung aufnimmt, ohne dass eine Kraft auf die Schlaufen wirkt. Die Schlaufen sind dabei so groß gewählt, dass auch bei einer großen Belastung des Grundgewebes, die zu einer gewissen Längung des Grundgewebes führt, die Schlaufen noch unbelastet bleiben. Auch bei einer großen Kraft am Grundgewebe wirken somit keine Kräfte auf die Schlaufen. Erst wenn ein Faden in der Grundstruktur reißt, kommen die Schlaufen zum Einsatz.

Die Textilie kann automatisiert in ein Spritzgusswerkzeug eingelegt werden und dadurch wird die Verbindung der Textilie mit den beiden Teilen ohne zusätzliche Elemente ermöglicht.

Beispielsweise kann das Scharnier eine Airbagklappe als erstes Teil mit einem Verldeidungsteil als zweites Teil ohne zusätzliche Elemente verbinden. Vorteilhaft ist eine geringe freie Länge zwischen den Teilen, in der der Flor nicht eingespritzt ist. Dadurch ergibt sich eine definierte Längung für eine sichere Rotation der Airbagklappe. Die maximale Längung wird dadurch entsprechend dem Anwendungsfall in engen Toleranzen definiert abstimmbar gehalten, um einerseits ein sicheres Öffnen der Airbagklappe zu gewährleisten und andererseits sicherzustellen, dass die Airbagklappe mit keinen anderen Gegenständen kollidiert und keine Gefahr für die Insassen des Fahrzeugs darstellt.

Vorteilhaft ist es, wenn die Schlaufen als Schlaufenreihe angeordnet sind. Insbesondere bei der Herstellung der Textilie als Gewebe ist es leicht möglich in die Textilie eine oder mehrere Schlaufenreihen einzuarbeiten, die einerseits als freie Schlaufenreihen zwischen den zu verbindenden Teilen für eine definierte Längung sorgen und andererseits beim Einspritzen der Textilie in die Teile für eine gute Verankerung der Textilie in den Teilen sorgen können. Um Material für den Flor zu sparen und um eine definierte Längung sicherzustellen, können eine oder mehrere Schlaufenreihen auch ausschließlich im Bereich zwischen den Teilen vorgesehen sein.

Um die Schlaufen im Flor der Textilie möglichst kurz halten zu können wird vorgeschlagen, dass mehrere Schlaufenreihen nebeneinander angeordnet sind.

Derartige Schlaufenreihen sind in unterschiedlichen Textilien herstellbar. Besonders einfach sind derartige Schlaufen jedoch herstellbar, wenn die Textilie ein Gewebe ist.

Dabei wird vorgeschlagen, dass die Schlaufen in der Kette ausgebildet sind.

Da es vorteilhaft ist, wenn die Schlaufen aus einem festeren Material als das übliche Textilmaterial hergestellt sind, wird vorgeschlagen, dass die Schlaufen aus einem Aramid-Material gebildet sind.

Dies ermöglicht es, das übliche Material der Textilie aus einem günstigeren Material herzustellen, sodass das Schlaufenmaterial reißfester ist als das übrige Material der Textilie.

Vorteilhaft ist es, wenn die Textilie ein Zweikettengewebe aufweist, dessen Grundkette eine geringere Festigkeit aufweist als die Polkette. Hierbei kann die Grundkette aus gesponnenen Garnen oder Filamenten niedriger Festigkeit und hoher Dehnung, vorzugsweise aus Polyester bestehen. Die Polkette besteht vorzugsweise aus gesponnenen Garnen oder Filamenten hoher Festigkeit, vorzugsweise aus Aramiden.

Die Festigkeit der Grundkette wird vorzugsweise so eingestellt, dass die Grundkette eine Festigkeit von 500 N / 5 cm bis 2.000 N / 5 cm beträgt. Dadurch liegt die Festigkeit des Grundgewebes in diesem Bereich und vorzugsweise zwischen 800 N / 5 cm und 1.200 N / 5 cm.

In einem bevorzugten Ausführungsbeispiel beträgt die Festigkeit der Polkette mindestens das 1,3-fache der Festigkeit der Grundkette. Die Einstellung der Polkette wird also so gewählt, dass die Festigkeit des Polgewebes 1,3 bis 10-fach höher ist, als die des Grundgewebes, vorzugsweise größer als 1.800 N / 5 cm, wenn die Festigkeit des Grundgewebes 1.000 N/5 cm beträgt.

Damit der Haltefaden des Gewebes im Gegensatz zu einer Masche ideal in Richtung der Zugspannung liegt wird vorgeschlagen, dass die Schlaufen in einem Faden gebildet sind, der quer zur Knicklinie des Scharniers verläuft. Vorzugsweise verläuft dieser Faden sogar genau orthogonal zu einer Knicklinie des Scharniers.

Die Haltefäden sollten sehr stabil ausgebildet sein. Diese Fäden sind daher relativ teuer. Wegen der Ausbildung der Schlaufen wird besonders viel Faden benötigt, wodurch die Kosten weiter steigen. Es wird daher vorgeschlagen, dass die Textilie nur zwischen den Teilen Schlaufen aufweist. Da die Textilie in den Teilen vorzugsweise eingespritzt ist, um dort fest verankert zu sein, reicht es aus, wenn ein Bereich der Textilie ohne Schlaufen eingespritzt wird und nur der Bereich zwischen den eingespritzten Teilen Schlaufen aufweist.

Da ein besonderes Anwendungsgebiet derartiger Scharniere in der Befestigung von Airbagklappen an der Verkleidung eines Fahrzeugs liegt, wird vorgeschlagen, dass ein Teil des Scharniers eine Airbagklappe ist.

Ein Ausführungsbeispiel der Erfindung wird in der Zeichnung dargestellt und anhand der Figuren näher erläutert. Es zeigt
Figur 1 schematisch eine Draufsicht auf eine Textilie für das Scharnier,
Figur 2 schematisch ein Scharnier mit eingespritzter Textilie und
Figur 3 schematisch eine geschnittene Seitenansicht des Florbereichs der Textilie.

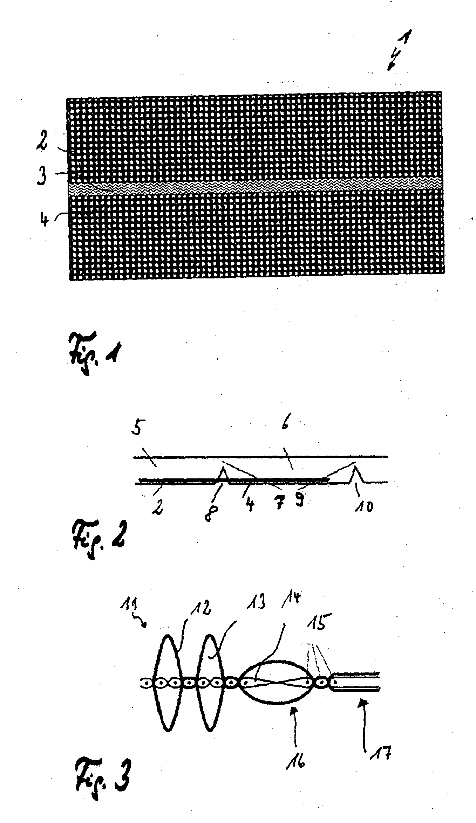

Das in Figur 1 gezeigte Gewebe 1 besteht aus einer ersten glatten Gewebeseite 2, einem mittleren Florbereich 3 und einer zweiten glatten Gewebeseite 4. Bei der Verwendung eines derartigen Gewebes als Scharnier wird die erste glatte Gewebeseite 2 in ein erstes Teil 5 eingespritzt und die zweite glatte Gewebeseite 4 wird in das zweite Teil 6 eingespritzt. Im vorliegenden Ausführungsbeispiel ist das erste Teil 5 ein Verkleidungsteil im Inneren eines Kraftfahrzeugs, während das zweite Teil 6 eine Airbagklappe ist.

Die Textilie ist in diesem Ausführungsbeispiel ein Zweikettengewebe, das in die erste glatte Gewebeseite 2, den mittleren Florbereich 3 und die zweite glatten Gewebeseite 4 uns somit in drei Sektionen unterteilt ist. Die beiden äußeren Seiten 2 und 4 sind hierbei fest mit dem Verldeidungsteil einerseits und der Airbagklappe andererseits durch Umspritzen verbunden. Dazu kann das Gewebe vorteilhaft mit einem Haftvermittler benetzt sein und/oder Öffnungen aufweisen, sodass das Polymer durch diese Öffnungen hindurch treten kann und einen Formschluss zum Gewebe herstellt.

Vorzugsweise ist die Materialzusammensetzung der Grundkette und des Schusses derart auf das Polymer abgestimmt, dass sich die Seiten 2 und 4 des Gewebes beim Spritzgussvorgang stoffschlüssig mit dem Verkleidungsteil bzw. der Airbagklappe verbinden. Dabei sind die Fäden sowohl der Polkette als auch der Grundkette in den Bereichen der Seiten 2 und 4 gestreckt ausgebildet.

Der mittlere Teil 3 ist als Flor aus Schlaufen ausgebildet. Bei einem derartigen Schlingengewebe bilden die Fäden der Polkette die Schlingen. Dabei können sich die Schlingen sowohl beidseitig als auch einseitig ausbilden.

Die Teile 5 und 6 sind nicht nur über die Textilie 1 miteinander verbunden, sondern auch über einen Steg 7, der schmaler ausgebildet ist als die übrige Stärke der Teile 5 und 6. Dadurch entsteht eine Sollbruchstelle am Steg 7. Außerdem entsteht neben dem Steg 7 ein Spalt 8, der durch die Textilie 1 überbrückt wird.

Die Textilie 1 wird derart in die Teile 5 und 6 eingespritzt, dass der Bereich 3 der Textilie 1 mit den Schlaufen im Spalt 8 liegt.

In diesem Spalt 8 können die Schlingen sowohl beidseitig der Textilie 1 ausgebildet sein als auch nur einseitig.

Sofern nur einseitig Schlingen vorgesehen sind, wird vorgeschlagen, diese an der dem Steg 7 abgewandten Seite der Textilie 1 anzubringen. Außerdem wird vorgeschlagen, die Textilie 1 in die Teile 5 und 6 nicht mittig einzubringen, sondern ebenfalls in einem Bereich der vom Steg 7 abgewandten Seite, wie dies schematisch in Figur 2 gezeigt ist.

Im Beispiel einer Airbagklappe ist die durch das Teil 6 gebildete Klappe rundherum über eine umlaufende Sollbruchstelle mit dem Teil 5 der Verkleidung verbunden. Daher zeigt die Figur 2 einen zweiten Steg 9 und einen zweiten Spalt 10, die eine Sollbruchstelle bilden, in der kein scharnierbildendes Gewebe eingearbeitet ist.

Der in Figur 3 gezeigte Ausschnitt aus einem Schlingengewebe zeigt einen ersten Bereich 11, in dem die Fäden 12 der Polkette zu Schlingen 13 aufgeschoben sind. Durch die Fäden 14 der Grundkette und die Schussfäden 15 werden die Schlaufen in Form gehalten.

Bei einer Dehnung und insbesondere einem Reißen der Fäden 14 der Grundkette, wie in den Bereichen 16 und 17 gezeigt, vergrößert sich der Abstand den Schussfäden 15, sodass sich spätestens nach Einreißen des Grundgewebes, dass heißt der Fäden 14 der Grundkette, die gewünschte Längung des Gewebes einstellt.

Für ein Scharnier an einer Airbagklappe wird vorgeschlagen, fünf Schlingenreihen vorzusehen, wobei die Schlingen eine Länge von 5 bis 20 mm aufweisen und an der dem Steg 7 abgewandten Seite der Textilie 1 vorstehen. Auch für andere Anwendungsbereiche hat sich eine Schlingenlänge von 5 bis 20 mm bewährt.

Die definierte Längung des Gewebes sorgt dafür, dass für derartige Anwendungsfälle das Gewebe nicht als Schlaufe gelegt werden muss. Dadurch wird die Automatisierbarkeit Prozesses erleichtert, wenn die Textilie während der Herstellung des Verkleidungsteils mit der Airbagklappe eingelegt wird.

Eine Verbindung ohne zusätzliche Verbindungsteile wird dadurch ermöglicht, dass das textile Flächengebilde von dem Polymer der Airbagklappe und dem des Verkleidungsteils umspritzt wird.

Da nur in dem freien mittleren Teil 3 zwischen den eingespritzten Seiten 2 und 4 des Gewebes 1 eine Dehnung möglich ist, kann der Schlaufenbereich auf diesen Bereich begrenzt werden, wodurch der Materialeinsatz für das Schlaufenmaterial verringert werden kann.

Durch die beim Webprozess eingestellte Länge der Schlaufen und die konstruktiv festgelegte Anzahl an Schlaufenreihen ist die Längung in engen Toleranzen definierbar.

Bei einem Einsatz eines derartigen Scharniers für eine Airbagklappe übt der Airbag nach Auslösen des Gasgenerators eine Kraft auf die Airbagklappe aus, sodass diese an den Stegen 7 und 9 reist und die Airbagklappe als Teil 6 nur noch über die Textilie 1 mit der Verkleidung, dem Teil 5, in Verbindung steht. Durch die Kraft des Airbags wird eine derartige Kraft auf die Airbagklappe ausgeübt, dass das die Textilie 1 gedehnt wird. Dadurch wird die Textilie 1 zu einem Scharnierband, das die Airbagklappe in einem definierten Abstand zu dem Verkleidungsbereich hält, mit dem die Airbagklappe über das textile Gewebe 1 verbunden ist.

## Patentansprüche

1. Scharnier mit einer Textilie, die ein erstes Teil des Scharniers und ein zweites Teil des Scharniers miteinander verbindet, ***dadurch gekennzeichnet, dass*** die Textilie ein Gewebe ist und zwischen den Teilen einen Flor (3) aus Schlaufen aufweist.

2. Scharnier nach Anspruch 1, ***dadurch gekennzeichnet, dass*** die Schlaufen als Schlaufenreihe angeordnet sind.

3. Scharnier nach Anspruch 2, ***dadurch gekennzeichnet, dass*** mehrere Schlaufenreihen nebeneinander angeordnet sind.

4. Scharnier nach einem der vorhergehenden Ansprüche, ***dadurch gekennzeichnet, dass*** die Schlaufen in der Kette ausgebildet sind.

5. Scharnier nach einem der vorhergehenden Ansprüche, ***dadurch gekennzeichnet*, *dass*** die Schlaufen aus einem Aramid-Material gebildet sind.

6. Scharnier nach einem der vorhergehenden Ansprüche, ***dadurch gekennzeichnet, dass*** die Textilie ein Zweikettengewebe aufweist, dessen Grundkette eine geringere Festigkeit aufweist als die Polkette.

7. Scharnier nach Anspruch 6, ***dadurch gekennzeichnet*, *dass*** die Festigkeit der Grundkette 500 N / 5 cm bis 2.000 N / 5 cm beträgt.

8. Scharnier nach einem der Ansprüche 6 oder 7, ***dadurch gekennzeichnet, dass*** die Festigkeit der Polkette mindestens das 1,3-fache der Festigkeit der Grundkette beträgt.

9. Scharnier nach einem der vorhergehenden Ansprüche, ***dadurch gekennzeichnet*, *dass*** die Schlaufen in einem Faden gebildet sind, der quer zur Knicklinie des Scharniers verläuft.

10. Scharnier nach einem der vorhergehenden Ansprüche, ***dadurch gekennzeichnet*, *dass*** die Textilie nur zwischen den Teilen Schlaufen aufweist.

11. Scharnier nach einem der vorhergehenden Ansprüche, ***dadurch gekennzeichnet, dass*** ein Teil eine Airbagklappe ist.

## Claims

1. A hinge with a textile, which connects a first part of the hinge and a second part of the hinge with one another, ***characterised in that*** the textile is a fabric and has a gauze (3) made up of loops between the parts.

2. The hinge in accordance with Claim 1, ***characterised in that*** the loops are arranged as a series of loops.

3. The hinge in accordance with Claim 2, ***characterised in that*** a plurality of series of loops are arranged next to one another.

4. The hinge in accordance with one of the preceding claims, ***characterised in that*** the loops are formed in the warp.

5. The hinge in accordance with one of the preceding claims, ***characterised in that*** the loops are formed from an aramide material.

6. The hinge in accordance with one of the preceding claims, ***characterised in that*** the textile has a double warp fabric, whose back warp has a lower strength than the nap warp.

7. The hinge in accordance with Claim 6, ***characterised in that*** the strength of the back warp is between 500 N / 5 cm and 2,000 N / 5 cm.

8. The hinge in accordance with one of the Claims 6 or 7, ***characterised in that*** the strength of the nap warp is at least 1.3 times the strength of the back warp.

9. The hinge in accordance with one of the preceding claims, ***characterised in that*** the loops are formed in a thread that runs transverse to the bending line of the hinge.

10. The hinge in accordance with one of the preceding claims, ***characterised in that*** the textile only has loops between the parts.

11. The hinge in accordance with one of the preceding claims, ***characterised in that*** one part is an airbag flap.

## Revendications

1. Charnière dotée d'un textile qui relie ensemble une première partie de la charnière et une seconde partie de la charnière, ***caractérisée en ce que*** le textile est un tissu et présente entre les parties un bouclage (3) formé de boucles.

2. Charnière selon la revendication 1, ***caractérisée en ce que*** les boucles sont disposées en rangées de boucles.

3. Charnière selon la revendication 2, ***caractérisée en ce que*** plusieurs rangées de boucles sont juxtaposées

4. Charnière selon une des revendications précédentes, ***caractérisée en ce que*** les boucles sont réalisées dans la chaîne.

5. Charnière selon une des revendications précédentes, ***caractérisée en ce que*** les boucles sont composées d'un matériau aramide.

6. Charnière selon une des revendications précédentes, ***caractérisée en ce que*** le textile présente un tissu à double chaîne dont la chaîne de base a une résistance inférieure à celle de la chaîne polaire.

7. Charnière selon la revendication 6, ***caractérisée en ce que*** la résistance de la chaîne de base va de 500 N/5 cm à 2 000 N/5 cm.

8. Charnière selon une des revendications 6 ou 7, ***caractérisée en ce que*** la résistance de la chaîne polaire représente au moins 1,3 fois la résistance de la chaîne de base.

9. Charnière selon une des revendications précédentes, ***caractérisée en ce que*** les boucles sont réalisées avec un fil qui s'étend transversalement par rapport à la ligne de pliage de la charnière.

10. Charnière selon une des revendications précédentes, ***caractérisée en ce que*** le textile ne présente des boucles qu'entre les parties.

11. Charnière selon une des revendications précédentes, ***caractérisée en ce qu'***une partie est une trappe d'airbag.
